# EUROPEAN PATENT SPECIFICATION

(11) **EP 3 067 979 B1**
(45) Date of publication and mention of the grant of the patent: **08.08.2018**
(21) Application number: 15193602.8
(22) Date of filing: 09.11.2015
(51) Int. Cl.: H01M 10/0525, H01M 10/056, H01M 10/058, H01M 4/13, H01M 4/38, H01M 4/525, H01M 4/62, H01M 10/052, H01M 10/44

(54) **ALL-SOLID-STATE BATTERY CONTAINING NANO-SOLID ELECTROLYTE AND METHOD OF MANUFACTURING THE SAME**
FESTKÖRPERBATTERIE MIT NANOSOLIDEM ELEKTROLYT UND VERFAHREN ZUR HERSTELLUNG DAVON
BATTERIE À L'ÉTAT SOLIDE CONTENANT UN ÉLECTROLYTE NANO SOLIDE ET SON PROCÉDÉ DE FABRICATION

(30) Priority: 09.03.2015 KR 20150032390
(43) Date of publication of application: 14.09.2016
(73) Proprietor: Hyundai Motor Company, Seoul 06797 (KR)
(72) Inventor: Lee, Sang Heon, 16925 Yongin-si, Gyeonggi-do (KR); Jeong, Byung Jo, 03416 Seoul (KR); Yoon, Yong Sub, 07548 Seoul (KR); Kim, Kyung Su, 16930 Yongin-si, Gyeonggi-do (KR); Min, Hong Seok, 16855 Yongin-si, Gyeonggi-do (KR)
(74) Representative: Viering, Jentschura & Partner mbB Patent- und Rechtsanwälte

(56) References cited:
- JP-A- 2001 243 984
- US-A1- 2008 311 480

## Description

### CROSS-REFERENCE TO RELATED APPLICATION

This application is based on and claims the benefit of priority to Korean Patent Application No. 10-2015-0032390, filed on March 9, 2015, in the Korean Intellectual Property Office.

### TECHNICAL FIELD

The present invention relates to an all-solid-state battery according to the preamble of claim 1. Accordingly, the present invention generally relates to an all-solid-state battery containing nano-solid electrolyte which may have improved stability and enhanced performance and may be manufactured without changing a process.

### BACKGROUND

An all-solid-state battery of the initially-mentioned type is known, e.g., from US 2008/311480 A1.

Initially distributed by Sony Corporation in the 1990s, lithium ion rechargeable batteries have been developed at a rapid pace, and in particular, have become an essential element in portable devices such as smartphones and notebook computers. In accordance with the development of small lithium ion rechargeable batteries, recently, a medium and large rechargeable battery market has regularly grown, since energy storage system (ESS) service has emerged due to accelerated market competition in global electric vehicles (EV) and worldwide power shortage. Thus, in the near future, an initiative of lithium ion rechargeable battery market is expected be shifted from small batteries for information technology (IT) to medium and large batteries.

As electrolytes of lithium ion rechargeable batteries currently on the market, a non-aqueous electrolytic solution obtained by mixing lithium salt and non-aqueous solvent or a gel electrolyte maintaining a non-aqueous solvent by a polymer has been used. The non-aqueous electrolytic solution usually has conductivity of about 10⁻²S/cm or greater, which are excellent properties.

However, the non-aqueous solvent is combustible, and thus, when an error such as excessive charging or an internal short circuit occurs, the electrolytic solution, which is volatile at high temperatures, may lead to ignition or explosion, thus lacking stability. This problem should be solved in the development field of medium and large rechargeable batteries sensitive in terms of securing stability and durability. Thus, all-solid-state lithium ion rechargeable batteries in which all of the components of cells are in a solid state by replacing the organic liquid electrolytes that cause an explosion with a non-combustible inorganic solid electrolyte has come into prominence as next-generation batteries.

For example, a solid electrolyte that can be in an all-solid-state lithium ion rechargeable battery include a gel type polymer electrolyte, an inorganic sulfide-based electrolyte, an oxide-based solid electrolyte, and the like. Among the options, the sulfide-based solid electrolyte has a high lithium ion conductivity value of 10⁻³S.cm⁻¹ or greater and has a wide potential window of 5V or greater, which helps reduce a degradation of characteristics in an extreme environment. Further, the sulfide-based solid electrolyte has a great advantage in designing a lithium ion rechargeable battery having high energy density.

However, in spite of such advantages, all-solid-state lithium ion rechargeable batteries may have a disadvantage in that they are difficult be commercialized due to low battery performance. When a solid state polymer electrolyte is used, an interior of a positive electrode, an interface between the positive electrode and a solid electrolyte, an interior of a solid electrolyte layer, an interface between the solid electrolyte and a negative electrode, and an interior of the negative electrode may include air gaps, and due to the air gaps, contact characteristics of each interface may be reduced to increase contact resistance and internal resistance of a battery. Further, when such a battery has a large area or a wet process is applied to a process for a large amount of batteries, the air gaps may be increased in size and number. This may reduce ion conductivity, which means mobility of lithium ions, and when the ion conductivity is low, capacity of batteries may be reduced and performance such as durability and output fall short of expectation.

A technique of filling the air gaps of the positive electrode, negative electrode, and the solid electrolyte with an electrolytic solution has been presented. This technique solves the problems of stability and interface resistance to a degree; however, since the electrolytic solution includes a non-aqueous solvent or ionic liquid, ion conductivity due to volatilization of the solvent or a side reaction between the solvent and an electrode may be reduced.

Additionally, a certain lithium ion rechargeable battery including a porous body formed of a solid electrolyte having lithium ion conductivity and an organic polymer and non-aqueous electrolytic solution filling fine holes of the porous body to provide lithium ion conductivity or a composite electrolyte having a polymer gel including a non-aqueous electrolytic solution has also been presented. This lithium ion rechargeable battery may have an effect of reducing interface resistance and increasing discharge capacity, but also may have a problem in that a process of forming the porous body is cumbersome and electric conductivity is reduced due to an organic polymer such as carboxymethylcellulose (CMC), and styrenebutadiene rubber (SBR) used to form the porous body.

Thus, development of an all-solid-state lithium ion rechargeable battery having excellent battery performance, while retaining excellent safety and durability, is still in need.

### SUMMARY

The present invention has been made to solve the above-mentioned problems occurring in the prior art while advantages achieved by the prior art are maintained intact.

In one aspect, the present invention provides an all-solid-state lithium ion rechargeable battery having battery performance enhanced by considerably reducing internal resistance, while retaining excellent stability and durability.

According to the present invention, an all-solid-state lithium ion rechargeable battery (also referred to simply as an "all-solid-state battery") comprises the features of claim 1. Further embodiments of the invention are described in the dependent claims.

In the all-solid-state lithium ion rechargeable battery, air gaps of the positive electrode, the negative electrode, and the inorganic solid electrolyte layer are filled with the nano-scale inorganic solid electrolyte filler, such that contact characteristics between the solid electrolyte and both electrodes may be enhanced, reducing interface resistance between the solid electrolyte and the positive electrode and the negative electrode. As consequence, internal resistance of the battery may be lowered.

Additionally, the inorganic solid electrolyte filler may also fill air gaps between the positive electrode and the inorganic solid electrolyte layer and between the negative electrode and the inorganic solid electrolyte layer.

Preferably, the inorganic solid electrolyte filler may be a filler having a nano-scale average particle diameter (D₅₀) ranging from 10 to 1000 nm. Further, in order to charge particles and obtain high density, preferably, the inorganic solid electrolyte filler may have a circular or oval shape and has a bimodal particle size distribution of a smaller size fraction of 100 nm or less and a larger size fraction ranging from 100 to 1000 nm, rather than a single size of a narrow particle size range.

The term "bimodal" as used herein refers to having two different modes or maximum distributions. For example, the bimodal size distribution may include two different ranges of size distributions, and each range may be apart by a predetermined interval or gap.

According to an exemplary embodiment, since the inorganic solid electrolyte filler may have bimodal size distribution, the spaces formed between the larger particles may be filled with the smaller particles thereby reducing empty gaps and substantially improving packing the entire space occupied by the inorganic solid electrolyte filler.

Preferably, the inorganic solid electrolyte layer or the inorganic solid electrolyte filler used in the present invention may include at least one selected from the group consisting of La_{0.51}Li_{0.34}TiO_{2.94} (LLTO), Li7La₃Zr₂O₁₂(LLZO), Li_{1.3}Al_{0.3}Ti_{1.7}(PO₄)₃(LATP), Li₂₊₂ₓZn₁₋ₓGeO₄(LISICON), Li₂S, Li₂S-P₂S₅, Li₂S-SiS₂, Li₂S-GeS₂, Li₂S-B₂S₅, Li₂S-Al₂S₅, Li_{3.25}Ge_{0.25}P_{0.75}S₄ (Thio-LISICON), Li3N, and Li_{3+y}PO₄₋ₓ,Nₓ (LIPON), and thereamong, preferably, Li₂S, Li₂S-P₂S₅, Li₂S-SiS₂, Li₂S-GeS₂, Li₂S-B₂S₅, Li₂S-Al₂S₅, or Li_{3.25}Ge_{0.25}P_{0.75}S₄ (Thio-LISICON), and sulfide-based solid electrolyte, is used in terms of ion conductivity.

Preferably, the polymer gel electrolyte may be a gel electrolyte obtained by steps comprising impregnating a polymer host formed of a thermoplastic polymer, a thermosetting polymer, or a copolymer thereof with an electrolytic solution and swelling the same. The thermoplastic polymer may be, for example, polyethyleneoxide (PEO), polyvinylidenefluoride (PVDF), or polyacrylonitrile (PAN), and the thermosetting polymer may be, for example, tetraethyleneglycoldiacrylate, polyethyleneglycoldiacrylate (PEGDA), or trimethylolpropanetriacrylate. Meanwhile, as the electrolytic solution, an electrolytic solution may be obtained by steps comprising dissolving at least one lithium salt selected from the group consisting of LiPF₆, LiClO₄, LiBF₄, and LiN(SO₂CF₃)₂ in at least one organic solvent selected from the group consisting of ethylene carbonate, propylene carbonate, dimethoxyethane, dimethylcarbonate, ethyl methyl carbonate, and diethylcarbonate may be used.

Preferably, the positive electrode and the negative electrode used in the present invention may be composite electrodes including a positive electrode and negative electrode active material, respectively, a conductor, a binder, and an inorganic solid electrolyte particle used in a general lithium battery. As the positive electrode active material, preferably, a lithium cobalt-based composite oxide, a lithium nickel-based composite oxide, a lithium manganese-based composite oxide, a lithium vanadium-based composite oxide, or a lithium iron-based composite oxide may be used. As the negative electrode active material, preferably, metal lithium, a lithium alloy, hard carbon, soft carbon, fullerene, TiO₂, or SnO₂ may be used. As the conductor, preferably, graphene, carbon nano-tube, Ketjen black, activated carbon, or vapor grown carbon fiber (VGCF) is used. Particularly, two or more types thereof may be mixed to be used in a hybrid conductor form.

Further, the binder may include one or more selected from the group consisting of polytetrafluoroethylene (PTFE), polyvinylidene fluoride (PVDF), carboxymethylcellulose (CMC), styrenebutadiene rubber (SBR), and polyimide.

Further provided are vehicle that comprise the all-solid-state battery as described herein.

### BRIEF DESCRIPTION OF THE DRAWINGS

The above and other objects, features and advantages of the present invention will be more apparent from the following detailed description taken in conjunction with the accompanying drawings.

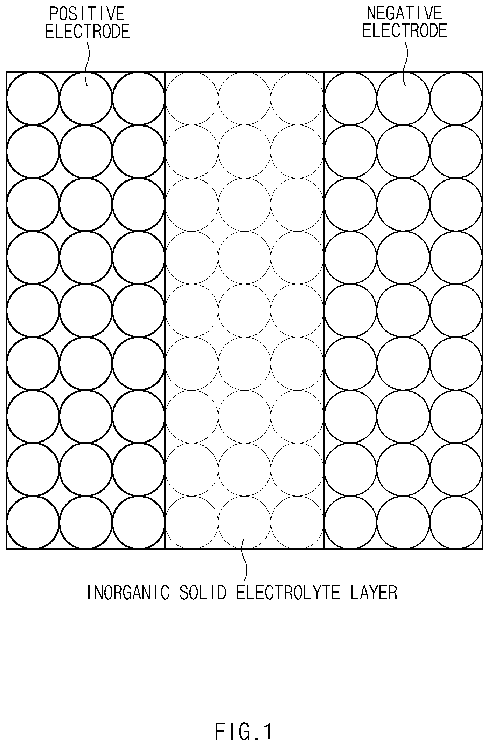

FIG. 1 illustrates an internal configuration of a conventional all-sold-state battery.

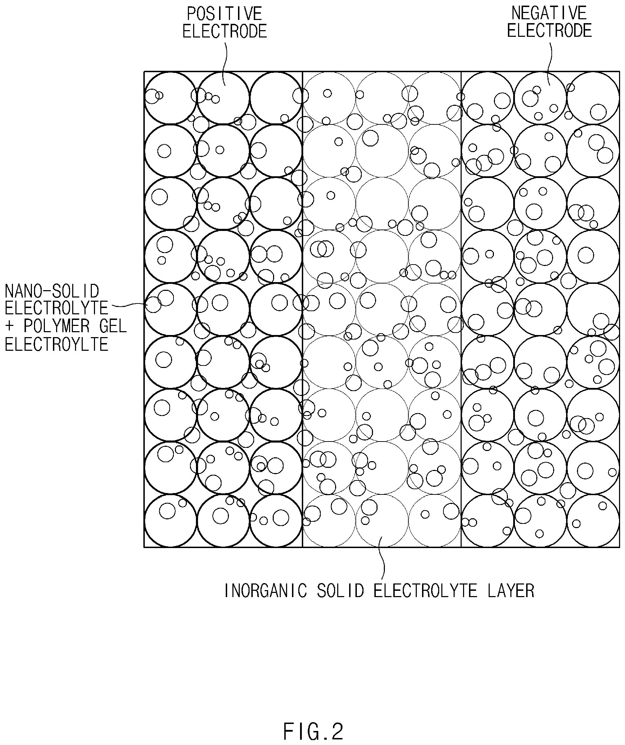

FIG. 2 illustrates an exemplary structure including a nano-solid electrolyte filler filling air gaps of a composite positive electrode, a composite negative electrode, an inorganic solid electrolyte layer, and the interior of an all-solid-state battery according to an exemplary embodiment of the present invention.

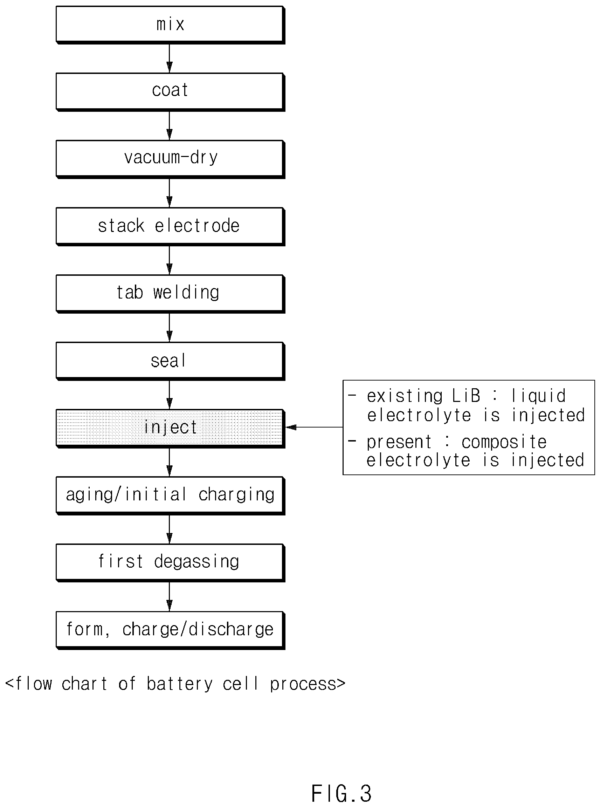

FIG. 3 shows a flow chart of an exemplary manufacturing process in which a composite electrolyte including a nano-solid electrolyte of the present invention may be injected during an injection process of an conventional lithium battery (LiB) manufacturing process, according to an exemplary embodiment of the present invention.

### DETAILED DESCRIPTION

The terminology used herein is for the purpose of describing particular exemplary embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

Unless specifically stated or obvious from context, as used herein, the term "about" is understood as within a range of normal tolerance in the art, for example within 2 standard deviations of the mean. "About" can be understood as within 10%, 9%, 8%, 7%, 6%, 5%, 4%, 3%, 2%, 1%, 0.5%, 0.1%, 0.05%, or 0.01% of the stated value. Unless otherwise clear from the context, all numerical values provided herein are modified by the term "about."

It is understood that the term "vehicle" or "vehicular" or other similar terms as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles, e.g., fuel derived from resources other than petroleum. As referred to herein, a hybrid vehicle is a vehicle that has two or more sources of power, for example both gasoline-powered and electric-powered vehicles.

Hereinafter, exemplary embodiment of the present invention will be described in detail with reference to the accompanying drawings.

An all-solid-state battery containing a nano-solid electrolyte of the present invention includes a positive electrode, a negative electrode, and an inorganic solid electrolyte layer. This configuration of the battery may be the same as that of the related art all-solid-state battery as shown in FIG. 1 or may be slightly modified within the scope of the present invention. Generally, as illustrated in FIG. 1, air gaps may be formed in each interface and within each member.

In an exemplary embodiment of the all-solid-state battery of the present invention, a positive electrode or a negative electrode may be formed of a mixture obtained by sufficiently mixing positive electrode or negative electrode active material particles, inorganic solid electrolyte particles, a carbon conductor, and a binder for settlement within an electrode at a suitable composition ratio. Preferably, the composition ratio of the above components in the positive electrode or the negative electrode may be about 50 wt% to 85 wt%: about 10 wt% to 45 wt%: about 0.5 wt% to 5 wt%: about 0.5 wt% to 5%, based on the total weight of the electrode, or particularly about 60 wt% to 75 wt%: about 20 wt% to 35 wt%: about 0.5 wt% to 5 wt%: about 0.5 wt% to 5 wt%. When the composition ratio is outside the aforementioned range, battery capacity or output performance may be degraded, and thus, the aforementioned range is preferred in order to maximize a function of an electrode complex.

The positive electrode active material particles may be, for example, a metal oxide including lithium to be inserted or removed electrochemically through an oxidation-reduction reaction. As such, a metal oxide including lithium, a lithium cobalt-based composite oxide such as LiCoO₂, a lithium nickel-based composite oxide such as LiNiO₂, a lithium manganese-based composite oxide such as LiMn₂O₄, a lithium vanadium-based composite oxide such as LiV₂O₅, or a lithium iron-based composite oxide such as LiFeO₂, as described above, may be used without limitation.

The solid electrolyte may be an inorganic solid electrolyte such as oxide-based solid electrolyte and a sulfide-based solid electrolyte. In general, a solid electrolyte having lithium ion conductivity of about 10⁻⁴S/cm or greater at room temperature may be preferably used, and a solid electrolyte having lithium ion conductivity of about 10⁻³S/cm or greater at room temperature may be particularly used. Typical oxide-based solid electrolytes may include La_{0.51}Li_{0.34}TiO_{2.94} (LLTO) having a Perovskite structure, Li₇La₃Zr₂O₁₂ (LLZO) having a garnet structure, NASICON-type Li_{1.3}Al_{0.3}Ti_{1.7} (PO₄)₃(LATP), and lithium super ionic conductor (LISICON), but without being limited thereto, and typical sulfide-based solid electrolytes may include Li₂S, Li₂S-P₂S₅, Li₂S-SiS₂, Li₂S-GeS₂, Li₂S-B₂S₅, Li₂S-Al₂S₅, or Li_{3.25}Ge_{0.25}P_{0.75}S₄ under a trade name of Thio-LISICON, and also include Li₃N or LIPON(Li₃+yPO₄-ₓNₓ), but without being limited thereto.

The conductor may not be particularly limited and may be any conductor used in a battery in the related arts. Preferably, graphene, carbon nano-tube, Ketjen black, activated carbon, super p carbon in the form of powder, Denka in the form of rod, and vapor grown carbon fiber (VGCF) are used. As the binder, a polymer compound of fluorine-based, diene-based, acryl-based, and silicon-based polymer may be preferably used. The binder may include, for example, polytetrafluoroethylene (PTFE), polyvinylidene fluoride (PVDF), carboxymethylcellulose (CMC), styrenebutadiene rubber (SBR), polyimide, and the like, but without being limited thereto.

The negative electrode active material may be, for example, a negative electrode active material particle allowing lithium to be inserted or removed electrochemically through an oxidation-reduction reaction. Such a particle may include metal lithium or a lithium alloy such as LiAl-based, LiAg-based, LiPb-based, and LiSi-based alloys. Further, general carbon materials such as hard carbon obtained by sintering and carbonizing graphite or a resin, soft carbon obtained by thermally treating cokes, and fullerene may be used, or a metal oxide such as TiO₂ or SnO₂ having a potential of 2V or less with respect to lithium may also be used, but the present invention is not limited thereto. In particular, a carbon material such as graphite, a carbon fiber, and activated carbon may be preferably used.

The characteristics of the all-solid-state battery of the present invention may be illustrated in FIG. 2. For example, air gaps present in the all-solid-state battery electrode jelly roll (positive electrode-inorganic solid electrolyte layer-negative electrode) may be impregnated with an inorganic solid electrolyte filler including a mixture of a nano-solid electrolyte and a polymer gel electrolyte, such that a degradation of contact characteristics with respect to interfaces due to the air gaps may be overcome, contact resistance and internal resistance of the battery may be reduced, and ion conductivity and characteristics of the all-solid-state battery may be considerably improved. Also, since the air gap problem greatly arising during a wet process for increasing an area of a battery and a process for a large amount of batteries may be overcome by the inorganic solid electrolyte filler according to the present invention, it may contribute to commercialization of all-solid-state batteries. Further, since the inorganic solid electrolyte filler may be injected to the air gaps within the battery through an injection process of the existing lithium battery manufacturing process, a design of the conventional manufacturing process may not be changed, thereby providing efficiency in an economical aspect.

The polymer gel electrolyte mixed with the nano-solid electrolyte may be a gel electrolyte generally used in a lithium battery (LiB), and preferably, a gel electrolyte obtained by steps comprising impregnating a polymer host formed of a thermoplastic polymer such as polyethyleneoxide (PEO), polyvinylidenefluoride (PVDF), or polyacrylonitrile (PAN), a thermosetting polymer obtained by polymerizing tetraethyleneglycoldiacrylate, polyethyleneglycoldiacrylate (PEGDA), or trimethylolpropanetriacrylate, and a copolymer obtained by polymerizing two or more types of these monomer and oligomer, with an electrolytic solution and swelling the same, but the present invention is not limited thereto. As the electrolytic solution used in the gel electrolyte, for example, an electrolytic solution obtained by dissolving lithium salt such as LiPF₆, LiClO₄, LiBF₄, or LiN(SO₂CF₃)₂ in a mixture solvent including ethylene carbonate, propylene carbonate, dimethoxyethane, dimethylcarbonate, ethylmethylcarbonate, and diethylcarbonate may be used.

Also, the all-solid-state battery of the present invention may include a positive electrode current collector and a negative electrode current collector. For example, the positive electrode current collector may be installed on a side of a composite positive electrode opposite to a side thereof in contact with a solid electrolyte layer, and the negative electrode current collector may be installed on a side of a composite negative electrode opposite to a side thereof in contact with a solid electrolyte layer. In this case, for example, after manufacturing of a stacked body including the composite positive electrode, the solid electrolyte, and the composite negative electrode of the present invention may be terminated, the positive electrode current collector and the negative electrode current collector may be installed, or the positive electrode current collector and the negative electrode current collector may also be installed through heat treatment under the same atmosphere as that of the composite positive electrode (negative electrode) and the solid electrolyte layer.

In addition, the positive electrode current collector and/or the negative electrode current collector may be formed of a conductive material known in the art, for example, silver, copper, nickel, cobalt, aluminum, stainless steel, gold, and platinum, and preferably, each of these elements may not react to a positive electrode active material and a negative electrode active material.

Hereinafter, the stacked body including the positive electrode, the inorganic solid electrolyte layer, and the negative electrode, and a method for impregnating the air gaps of the stacked body with a nano-solid electrolyte will be described.

When a positive electrode is manufactured, positive electrode active material powder, inorganic solid electrolyte powder, carbon conductive powder and a binder may be applied to an organic solvent, and sufficiently mixed in an appropriate composition ratio to obtain slurry. As the organic solvent, cyclic aliphatic hydrocarbons such as cyclopentane and cyclohexane, or aromatic hydrocarbons such as toluene and xylene may be applied, and in particular, these solvents may be used alone or two or more types thereof may be mixed. That is, these solvents may be suitably and selectively used in terms of a dry rate or an environment. In the present invention, when a sulfide-based electrolyte is used as the solid electrolyte, a non-polar solvent based on aromatic hydrocarbons may be particularly used in terms of chemical reactivity.

When a negative electrode is manufactured, like the manufacturing of the positive electrode, negative electrode active material powder, inorganic solid electrolyte powder, carbon conductive powder and a binder may be applied to an organic solvent, and sufficiently mixed in an appropriate composition ratio to obtain slurry. The organic solvent may be the same as that of the case of the positive electrode, and as the negative electrode active material, carbons such as natural graphite, artificial graphite, soft carbon, or hard carbon may be applied.

Subsequently, in preparing solid electrolyte slurry, the same elements may be mixed in the same manner as that for manufacturing the electrode slurry. Preferably, the solid electrolyte and the binder may be mixed in the ratio of about 90 wt% to 100 wt% : about 0 wt% to 10 wt% and the binder solution may be prepared with a solid content of about 5% or greater. In general, the binder may be applied to secure physical properties of the slurry and maintain binding strength between electrolyte particles, but may disadvantageously hinder ion conduction between electrolyte particles. Thus, preferably, the weight ratio of the binder may be minimized. Thus, a small amount of the binder, i.e., less than about 10%, may be used according to characteristics of the electrolyte film, or preferably, the binder may not be applied on the assumption that electrolyte binding strength is secured.

The nano-composite electrolyte as a mixture of a nano-solid electrolyte and a polymer gel electrolyte of the present invention may be prepared by mixing a nano-scale solid electrolyte and a gel electrolyte generally used in a lithium battery in the ratio of about 60 wt% to 90 wt%: about 10 wt% to 40 wt% in a mixer, and such a preparation process may be suitably performed under a dry room atmosphere. When the weight ratios of the electrolytes are outside of the foregoing weight ratios, it may be difficult to secure connectivity between nano-solid electrolyte particles which may cause most lithium ions to be transferred through the gel electrolyte having low conductivity, rather than through the solid electrolyte and fundamentally degrade performance of the battery. Thus, preferably, the solid electrolyte is applied within the range of about 60 wt% to 90 wt%. Further, the nano-scale solid electrolyte may be nanosized through a ball milling process in addition to the existing solid electrolyte manufacturing process. As consequence, for example, a BET specific surface area at a level of about 30 to 70m²/g may be obtained.

The manufactured composite positive electrode, the solid electrolyte, and the composite negative electrode may be sequentially stacked, without being rolled, and thereafter, the prepared composite electrolyte may be injected into air gaps of the stacked body by using an injection process, thereby manufacturing the all-solid-state battery of the present invention. As illustrated in FIG. 3, it can be seen that the all-solid-state battery of the present invention is manufactured through the same method or slightly modified method as the conventional lithium battery manufacturing process, except for the injection of the composite electrolyte during the injection process. Since there may have no change point in terms of facilities, the all-solid-state battery of the present invention may be applied without incurring extra cost. However, according to circumstances, specific conditions of the injection process need to be changed in order to be applicable. That is, in order to secure uniformity of the electrolyte within a cell structure by maximizing impregnation characteristics, an aging process, or the like, needs to be performed after a vacuum/pressing treatment or after injection.

### EXAMPLES

### Example 1: Manufacturing all-solid-state battery containing nano-solid electrolyte

### 1. Manufacturing solid electrolyte

In order to manufacture a stacked body for an all-solid-state battery, first, a solid electrolyte was prepared. The solid electrolyte was obtained by mixing Li₂S (Alfa, 99.9%), an amorphous sulfide solid electrolyte, and starting powder of P₂S₅ (Aldrich, 99%) in a mole ratio of 75:25, and subsequently performing mechanical milling of high energy for 20 hours. Since the sulfide-based solid electrolyte reacts to moisture, the process was performed within a globe box under a nitrogen atmosphere in order to avoid contact with moisture in the air, and the amorphous solid electrolyte synthesized through the milling process was heat-treated at a temperature of 230°C, at which a metastable electrolyte having high ion conductivity may be precipitated, for three hours to become a solid electrolyte in a glass-ceramics state.

### 2. Preparing composite positive electrode slurry

Lithium cobalt oxide (LiCoO₂, Aldrich) positive electrode active material powder, 75Li₂S.25P₂S₅ solid electrolyte powder, conductive powder, and a binder were sufficiently mixed in a composition ratio of 65:25:5:5 to prepare a composite positive electrode slurry. As the conductive powder, powder obtained by mixing VGCF and Super p carbon in a mixture ratio of 2:1 by weight ratio was used, and as the binder, polytetrafluoroethylene (PTFE) was used.

Before mixing the four types of materials, the conductive powder (or conductor), easy to be cohesive, was dispersed for 30 minutes through ultrasonic dispersion by using anhydrous toluene as a solvent for uniform dispersion, and thereafter, was mixed together with the solid electrolyte, the positive electrode active material, and the binder to obtain uniformly dispersed slurry. The mixing process was continued on the all-solid-state composite positive electrode mixed with anhydrous toluene in a wet manner until the anhydrous toluene was sufficiently evaporated, and after the anhydrous toluene was sufficiently evaporated, the all-solid-state composite positive electrode was dried at a temperature of 120°C for three hours.

### 3. Preparing composite negative electrode slurry

Composite negative electrode slurry was prepared in the same manner as that of the composite positive electrode slurry, except for the use of metal lithium as a negative electrode active material.

### 4. Preparing nano-composite electrolyte

In order to secure nano-scale electrolyte powder for preparing nano-composite electrolyte to be realized in the present invention, a ball milling process was performed in addition to the existing solid electrolyte manufacturing process. Micrometer-scale powder (75Li₂S.25P₂S₅) obtained was applied to a high energy milling machine, and wet milling was performed in order to control a particle size and obtain uniform particles. As a solvent used herein, an organic solvent (generally, toluene, xylene, dodecane, or dibutylether) able to minimize reactivity with the electrolyte was applied, and in particular, in order to control a desired particle size, the specification of the solvent may be altered. The solid electrolyte powder, which underwent the wet ball milling process, was nanosized to obtain a BET specific surface area at a level of about 55m²/g.

LiPF₆ was dissolved in a mixture solvent obtained by mixing ethylenecarbonate (EC) and diethylcarbonate (DEC) in a volume ratio of 3:7 to prepare a non-aqueous electrolytic solution including 1 mol/L of LiPF₆, and subsequently, 89.95 part by weight of the non-aqueous electrolytic solution and 10 part by weight of polyethyleneglycoldiacrylate (PEGDA) (molecular weight: 250, Aldrich) were mixed and 0.05 part by weight of benzoyl peroxide was added thereto as a polymerization initiator to obtain a polymer gel electrolyte.

The polymer gel electrolyte and the nano-scale solid electrolyte (75Li₂S.25P₂S₅) were mixed in the ratio of 15:85 by weight ratio to obtain a hybrid nano-composite electrolyte to be injected to air gaps of the battery through an injection process of the lithium battery manufacturing process.

### 5. Manufacturing all-solid-state lithium ion rechargeable battery

The composite positive electrode, the solid electrolyte, and the composite negative electrode manufactured in steps 1 to 3 were sequentially stacked, without being rolled, and the nano-composite electrolyte prepared in step 4 was subsequently injected to air gaps of the solid electrolyte through an injection process to impregnate all of the air gaps within the composite positive electrode and the composite negative electrode and air gaps between interfaces, as well as air gaps within the solid electrolyte with the nano-composite electrolyte. Thereafter, the other remaining processes, for example, aging, degassing, and charging and discharging processes, were performed in the same manner as those of the existing lithium battery process, thus manufacturing an all-solid-state lithium ion rechargeable battery.

### Evaluation: Cycle performance of all-solid-state lithium ion rechargeable battery

The all-solid-state lithium ion rechargeable battery manufactured in Example 1 was installed in an electrochemical device. Thereafter, an operation of applying a current between the composite positive electrode and the composite negative electrode at a temperature of 25°C to perform charging until a cell voltage reaches 4.2V and subsequently perform discharging until the cell voltage reaches 1.9V was repeated 20 cycles, and the cycle performance was evaluated. Here, current was applied with a current density of 0.125mA/cm² in first to fifth cycles, and current was applied with a current density of 0.375mA/cm² in sixth to twentieth cycles.

Discharge capacity in 10^{th} cycle was 135 mAh/g (an average after 5 times), superior to that of 94mAh/g of a general all-solid-state battery without the nano-solid electrolyte. Also, a cell voltage at charge capacity of 75mAh/g (SOC: about 50%) was measured as 3.4 V when the nano-solid electrolyte was applied and 3.9V without the nano-solid electrolyte. Through the results, it can be supposed that the heterogeneous electrolytes of the nano-solid electrolyte plus polymer gel electrolyte contribute to enhancement of cell internal resistance due to internal air gaps.

Comparative example 2 (not falling under the scope of the present invention as claimed in the appended claims): When ratio of polymer gel electrolyte and nano-solid electrolyte was different an all-solid-state battery was manufactured in the same manner as that of Example 1, except that the polymer gel electrolyte and the nano-scale solid electrolyte (75Li₂S.25P₂S₅) were mixed in the ratio of 50:50 by weight ratio.

The all-solid-state battery was tested for evaluation in the same manner as that of the all-solid-state battery of the present invention. The results showed that when the polymer gel electrolyte and the nano-scale solid electrolyte were mixed in the ratio of 15:85 by weight ratio, discharge capacity was 135 mAh/g (in average for five times), while that of the all-solid-state battery of this Example was 77 mAh/g.

As described above, according to the exemplary embodiments of the present invention, since the all-solid-state battery containing the inorganic nano-solid electrolyte has substantially improved battery performance as well as excellent safety, the all-solid-state battery may be widely used and contribute to development of industry such as electric vehicles, or the like, in which middle and large lithium ion rechargeable batteries are used.

Hereinabove, although the present invention has been described with reference to exemplary embodiments and the accompanying drawings, the present invention is not limited thereto, but may be variously modified and altered by those skilled in the art to which the present invention pertains without departing from the scope of the present invention claimed in the following claims.

## Claims

1. An all-solid-state battery comprising:
a positive electrode;
a negative electrode;
an inorganic solid electrolyte layer disposed between the positive electrode and the negative electrode; and
an inorganic solid electrolyte filler filling air gaps of the positive electrode, the negative electrode, and the inorganic solid electrolyte layer,
**characterized in that**
the inorganic solid electrolyte filler is a mixture of a polymer gel electrolyte and a nano-scale solid electrolyte, the mixture having the nano-scale solid electrolyte and the polymer gel electrolyte in a weight ratio of 60 to 90 : 10 to 40.

2. The all-solid-state battery according to claim 1, wherein the nano-scale solid electrolyte has an average particle diameter (D₅₀) ranging from 10 to 1000 nm, and has a bimodal particle size distribution of a smaller size fraction of 100 nm or less, and a larger size fraction ranging from 100 to 1000 nm.

3. The all-solid-state battery according to any one of claims 1 to 2, wherein the inorganic solid electrolyte layer or the inorganic solid electrolyte filler comprises at least one selected from the group consisting of La_{0.51}Li_{0.34}TiO₂.₉₄(LLTO), Li₇La₃Zr₂O₁₂(LLZO), Li_{1.3}Al_{0.3}Ti_{1.7}(PO₄)₃(LATP), Li₂₊₂ₓZn₁. ₓGeO₄(LISICON), Li₂S, Li₂S-P₂S₅, Li₂S-SiS₂, Li₂S-GeS₂, Li₂S-B₂S₅, Li₂S-Al₂S₅, Li_{3.25}Ge_{0.25}P_{0.75}S₄ (Thio-LISICON), Li3N, and Li₃+yPO₄-ₓNₓ (LIPON).

4. The all-solid-state battery according to any one of claims 1 to 3, wherein the polymer gel electrolyte is a gel electrolyte constituted by a polymer host, formed of a thermoplastic polymer, a thermosetting polymer, or a copolymer thereof, which is impregnated with an electrolytic solution which itself is swollen.

5. The all-solid-state battery according to claim 4, wherein the electrolytic solution is a solution having at least one lithium salt, selected from the group consisting of LiPF₆, LiClO₄, LiBF₄, and LiN(SO₂CF₃)₂, dissolved in at least one organic solvent selected from the group consisting of ethylene carbonate, propylene carbonate, dimethoxyethane, dimethylcarbonate, ethylmethylcarbonate, and diethylcarbonate.

6. The all-solid-state battery according to any one of claims 1 to 5, wherein the positive electrode is a composite electrode comprising a positive electrode active material, a conductor, a binder, and inorganic solid electrolyte particles.

7. The all-solid-state battery according to any one of claims 1 to 6, wherein the negative electrode is a composite electrode comprising a negative electrode active material, a conductor, a binder, and inorganic solid electrolyte particles.

8. The all-solid-state battery according to claim 6 or 7, wherein the positive electrode active material comprises at least one selected from the group consisting of a lithium cobalt-based composite oxide, a lithium nickel-based composite oxide, a lithium manganese-based composite oxide, a lithium vanadium-based composite oxide, and a lithium iron-based composite oxide.

9. The all-solid-state battery according to claim 7 or 8, wherein the negative electrode active material comprises at least one selected from the group consisting of metal lithium, a lithium alloy, hard carbon, soft carbon, fullerene, TiO₂, and SnO₂.

10. The all-solid-state battery according to any one of claims 6 to 9, wherein the conductor comprises one or more selected from the group consisting of graphene, carbon nano-tube, Ketjen black, activated carbon, and vapor grown carbon fiber (VGCF).

11. The all-solid-state battery according to any one of claims 6 to 10, wherein the binder comprises one or more selected from the group consisting of polytetrafluoroethylene (PTFE), polyvinylidene fluoride (PVDF), carboxymethylcellulose (CMC), styrenebutadiene rubber (SBR), and polyimide.

12. A vehicle comprising an all-solid-state battery of any one of the claims 1 to 11.

## Patentansprüche

1. Eine Feststoffbatterie, aufweisend:
eine positive Elektrode;
eine negative Elektrode;
eine Anorganischer-Feststoffelektrolyt-Schicht, welche zwischen der positiven Elektrode und der negativen Elektrode angeordnet ist; und
einen Anorganischer-Feststoffelektrolyt-Füllstoff, welcher Luftspalte der positiven Elektrode, der negativen Elektrode und der Anorganischer-Feststoffelektrolyt-Schicht füllt,
**gekennzeichnet dadurch, dass**
der Anorganischer-Feststoffelektrolyt-Füllstoff eine Mischung aus einem Polymergelelektrolyt und einem nanoskaligen Feststoffelektrolyten ist, wobei die Mischung den nanoskaligen Feststoffelektrolyten und den Polymergelelektrolyten in einem Gewichtsverhältnis von 60 bis 90 : 10 bis 40 aufweist.

2. Die Feststoffbatterie gemäß Anspruch 1, wobei der nanoskalige Feststoffelektrolyt einen mittleren Partikeldurchmesser (D₅₀), der im Bereich von 10 bis 1000 nm liegt, aufweist, und eine bimodale Partikelgrößenverteilung von einem kleineren Größenanteil von 100nm oder weniger und einem größeren Größenanteil, der im Bereich von 100 bis 1000 nm liegt, aufweist.

3. Die Feststoffbatterie gemäß irgendeinem der Ansprüche 1 bis 2, wobei die Anorganischer-Feststoffelektrolyt-Schicht oder der Anorganischer-Feststoffelektrolyt-Füllstoff mindestens eins, ausgewählt aus der Gruppe, welche aus La_{0,51}Li_{0,34}TiO_{2,94} (LLTO), Li₇La₃Zr₂O₁₂ (LLZO), Li_{1,3}Al_{0,3}Ti_{1,7}(PO₄)₃ (LATP), Li₂₊₂ₓZn₁₋ₓGeO₄ (LISICON), Li₂S, Li₂S-P₂S₅, Li₂S-SiS₂, Li₂S-GeS₂, Li₂S-B₂S₅, Li₂S-Al₂S₅, Li_{3,25}Ge_{0,25}P_{0,75}S₄ (Thio-LISICON), Li₃N und Li₃+_{y}PO₄₋ₓNₓ (LIPON) besteht, aufweist.

4. Die Feststoffbatterie gemäß irgendeinem der Ansprüche 1 bis 3, wobei der Polymergelelektrolyt ein Gelelektrolyt ist, welcher aus einem aus einem thermoplastischem Polymer, einem duroplastischen Polymer oder einem Copolymer hiervon gebildeten Polymer-Wirtsmaterial, welches mit einer Elektrolytlösung imprägniert ist, die wiederum gequollen ist, gebildet ist.

5. Die Feststoffbatterie gemäß Anspruch 4, wobei die Elektrolytlösung eine Lösung ist, welche mindestens ein aus der Gruppe, die aus LiPF₆, LIClO₄, LiBF₄ und LiN(SO₂CF₃) besteht, ausgewähltes Lithiumsalz, das in mindestens einem organischen Lösungsmittel, das aus der Gruppe, die ausEthylencarbonat, Propylencarbonat, Dimethoxyethan, Dimethylcarbonat, Ethylmethylcarbonat, und Diethylcarbonat besteht, ausgewählt ist, gelöst ist, aufweist.

6. Die Feststoffbatterie gemäß irgendeinem der Ansprüche 1 bis 5, wobei die positive Elektrode eine Verbundelektrode ist, welche ein Positive-Elektrode-Aktivmaterial, einen Leiter, ein Bindemittel und Anorganischer-Feststoffelektrolyt-Partikel aufweist.

7. Die Feststoffbatterie gemäß irgendeinem der Ansprüche 1 bis 6, wobei die negative Elektrode eine Verbundelektrode ist, welche ein Negative-Elektrode-Aktivmaterial, einen Leiter, ein Bindemittel und Anorganischer-Feststoffelektrolyt-Partikel aufweist.

8. Die Feststoffbatterie gemäß Anspruch 6 oder 7, wobei das Positive-Elektrode-Aktivmaterial mindestens eines, ausgewählt aus der Gruppe, die aus einem Lithium-Cobalt-basierten Verbundoxid, einem Lithium-Nickel-basierten Verbundoxid, einem Lithium-Mangan-basierten Verbundoxid, einem Lithium-Vanadiumbasierten Verbundoxid und einem Lithium-Eisen-basierten Verbundoxid besteht, aufweist.

9. Die Feststoffbatterie gemäß Anspruch 7 oder 8, wobei das Negative-Elektrode-Aktivmaterial mindestens eine/eines, ausgewählt aus der Gruppe, die aus metallischem Lithium, einer Lithiumlegierung, festem Kohlenstoff, Weichkohlenstoff, Fulleren, TiO₂ und SnO₂ besteht, aufweist.

10. Die Feststoffbatterie gemäß irgendeinem der Ansprüche 6 bis 9, wobei der Leiter eine/eines oder mehr, ausgewählt aus der Gruppe, welche aus Graphen, Kohlenstoffnanoröhrchen, Ketjen-Ruß, Aktivkohle und dampfphasengezüchteter Kohlenstofffaser (VGCF) besteht, aufweist.

11. Die Feststoffbatterie gemäß irgendeinem der Ansprüche 6 bis 10, wobei das Bindemittel einen/eines oder mehr, ausgewählt aus der Gruppe, welche aus Polytetrafluorethylen (PTFE), Polyvinylidenfluorid (PVDF), Carboxymethylcellulose (CMC), Styrol-Butadien-Kautschuk (SBR) und Polyimid besteht, aufweist.

12. Ein Fahrzeug, aufweisend eine Feststoffbatterie gemäß irgendeinem der Ansprüche 1 bis 11.

## Revendications

1. Batterie à l'état solide comprenant :
une électrode positive ;
une électrode négative ;
une couche d'électrolyte solide inorganique disposée entre l'électrode positive et l'électrode négative ; et
une charge d'électrolyte solide inorganique remplissant des espaces d'air de l'électrode positive, de l'électrode négative et de la couche d'électrolyte solide inorganique,
**caractérisée en ce que**
la charge d'électrolyte solide inorganique est un mélange d'un électrolyte à base de gel polymère et d'un électrolyte solide à l'échelle nanométrique, le mélange ayant l'électrolyte solide à l'échelle nanométrique et l'électrolyte à base de gel polymère dans un rapport pondéral de 60 à 90/10 à 40.

2. Batterie à l'état solide selon la revendication 1, dans laquelle l'électrolyte solide à l'échelle nanométrique a un diamètre de particule moyen (D₅₀) se situant dans la plage de 10 à 1 000 nm, et a une distribution de taille de particule bimodale d'une fraction de taille inférieure de 100 nm ou moins et d'une fraction de taille supérieure se situant dans la plage de 100 à 1 000 nm.

3. Batterie à l'état solide selon l'une quelconque des revendications 1 à 2, dans laquelle la couche d'électrolyte solide inorganique ou la charge d'électrolyte solide inorganique comprend au moins un choisi dans le groupe constitué de La_{0,51}Li_{0,34}TiO_{2,94} (LLTO), Li₇La₃Zr₂O₁₂ (LLZO), Li_{1,3}Al_{0,3}Ti_{1,7}(PO₄)₃ (LATP), Li₂₊₂ₓZn₁₋ₓGeO₄ (LISICON), Li₂S, Li₂S-P₂S₅, Li₂S-SiS₂, Li₂S-GeS₂, Li₂S-B₂S₅, Li₂S-Al₂S₅, Li_{3,25}Ge_{0,25}P_{0,75}S₄ (Thio-LISICON), Li₃N et Li₃₊yPO₄₋ₓNₓ (LIPON).

4. Batterie à l'état solide selon l'une quelconque des revendications 1 à 3, dans laquelle l'électrolyte à base de gel polymère est un électrolyte à base de gel constitué d'un hôte polymère, formé d'un polymère thermoplastique, d'un polymère thermodurcissable ou d'un copolymère de ceux-ci qui est imprégné d'une solution électrolytique, qui lui-même est gonflé.

5. Batterie à l'état solide selon la revendication 4, dans laquelle la solution électrolytique est une solution ayant au moins un sel de lithium, choisi dans le groupe constitué de LiPF₆, LiClO₄, LiBF₄ et LiN(SO₂CF₃)₂, dissous dans au moins un solvant organique choisi dans le groupe constitué du carbonate d'éthylène, du carbonate de propylène, du diméthoxyéthane, du diméthylcarbonate, de l'éthylméthylcarbonate et du diéthylcarbonate.

6. Batterie à l'état solide selon l'une quelconque des revendications 1 à 5, dans laquelle l'électrode positive est une électrode composite comprenant un matériau actif d'électrode positive, un conducteur, un liant et des particules d'électrolyte solide inorganique.

7. Batterie à l'état solide selon l'une quelconque des revendications 1 à 6, dans laquelle l'électrode négative est une électrode composite comprenant un matériau actif d'électrode négative, un conducteur, un liant et des particules d'électrolyte solide inorganique.

8. Batterie à l'état solide selon la revendication 6 ou 7, dans laquelle le matériau actif d'électrode positive comprend au moins un choisi dans le groupe constitué d'un oxyde composite à base de cobalt et de lithium, d'un oxyde composite à base de nickel et de lithium, d'un oxyde composite à base de manganèse et de lithium, d'un oxyde composite à base de vanadium et de lithium et d'un oxyde composite à base de fer et de lithium.

9. Batterie à l'état solide selon la revendication 7 ou 8, dans laquelle le matériau actif d'électrode négative comprend au moins un choisi dans le groupe constitué du lithium métallique, d'un alliage de lithium, du carbone dur, du carbone mou, du fullerène, du TiO₂ et du SnO₂.

10. Batterie à l'état solide selon l'une quelconque des revendications 6 à 9, dans laquelle le conducteur comprend un ou plusieurs choisis dans le groupe constitué du graphène, d'un nanotube de carbone, du noir de Ketjen, du charbon actif et d'une fibre de carbone à croissance en phase vapeur (VGCF).

11. Batterie à l'état solide selon l'une quelconque des revendications 6 à 10, dans laquelle le liant comprend un ou plusieurs choisis dans le groupe constitué du polytétrafluoroéthylène (PTFE), du fluorure de polyvinylidène (PVDF), de la carboxyméthylcellulose (CMC), du caoutchouc de styrène-butadiène (SBR) et du polyimide.

12. Véhicule comprenant une batterie à l'état solide selon l'une quelconque des revendications 1 à 11.
